**Europäisches Patentamt**

**European Patent Office**

**Office européen des brevets**

(19)

(11) Veröffentlichungsnummer: **0 455 262 A1**

# (12) EUROPÄISCHE PATENTANMELDUNG

(21) Anmeldenummer: **91107249.4**

(22) Anmeldetag: **04.05.91**

(51) Int. Cl.⁵: **A47B 13/02**, F16B 12/52

(30) Priorität: **04.05.90 IT 2021190**

(43) Veröffentlichungstag der Anmeldung:
**06.11.91 Patentblatt 91/45**

(84) Benannte Vertragsstaaten:
**AT BE DE ES FR GB GR IT NL**

(71) Anmelder: **MANART S.r.l.**
**Via Fiume, 27**
**I-22065 Cassago Brianza(IT)**

(72) Erfinder: **Corbetta, Edoardo**
**Via Fiume, 27**
**I-22065 Cassago(IT)**

(74) Vertreter: **Mayer, Hans Benno, Dipl.-Ing.**
**de Dominicis & Mayer S.r.l. Piazzale**
**Marengo, 6**
**I-20121 Milano(IT)**

(54) **Verbindungsstück zum Befestigen eines Beines an einem Möbelteil.**

(57) Verbindungsstueck zum Befestigen eines Beines an einem Moebelteil, bestehend aus einem huelsenfoermigen Anschlusskoerper mit einem konisch ausgebildeten Kranz aus Spannbacken versehen mit einem Innengewinde, das zur Aufnahme eines Gewindestueckes des Beines dient, sowie einem Aussengewinde zur Aufnahme einer Spannmutter.

FIG. 1

Die vorstehende Erfindung betrifft ein Verbindungsstueck zum Verbinden eines Beines mit einem Moebelteil.

Zum Verbinden eines rohrfoermigen Beines, z.B. mit einer Tischplatte, ist es bekannt, ein Verbindungsstueck zu verwenden, bestehend aus einem Befestigungsflansch, der an der Tischplatte festgelegt ist und einem auseinanderspreizbaren, tassenfoermigen Bauteil, das in ein rohrfoermiges Bein einsetzbar ist.

Eine radial angeordnete Schraube im tassenfoermigen Bauteil, die von aussen zugaenglich ist, ermoeglicht es, die Teile des tassenfoermigen Bauteiles nach aussen, gegen die Wand des Tischbeines, zu spreizen.

Bei Befestigungseinrichtungen dieser Art liegt das obere Endstueck des Beines direkt an einem Flansch an. Eine Hoehenverstellung des Beines, z.B. zum Ausgleich von Unebenheiten des Fussbodens, ist bei dieser Ausfuehrungsform nicht durchfuehrbar, deshalb ist es erforderlich, einen mit einer Einstellschraube versehenen Fuss am unteren Ende des Beines vorzusehen. Diese Schraubfuesse sind aufwendig in der Herstellung und nicht besonders formschoen.

Bei den bekannten Verbindungsstuecken erfolgt auch kein gleichmaessiges Verspannen des Verbindungsstueckes um das Bein. Das Tischbein muss genau auf Laenge geschnitten werden und einer Endbearbeitung unterzogen werden.

Aufgabe der vorstehenden Erfindung ist es, ein Verbindungsstueck vorzuschlagen, mit dem ein Bein mit einem Moebelteil verbunden werden kann und gleichzeitig eine Hoeheneinstellung des Beines moeglich wird und eine Endbearbeitung des Beines nicht erforderlich ist. Desweiteren soll eine einfache Montage sowie ein Spannen des Beines durch einfaches Verstellen auch von technisch nicht vorgebildeten Personen und ohne Zuhilfenahme eines Werkzeuges moeglich sein.

Die erfindungsgemaesse Aufgabe wird mit einem Verbindungsstueck geloest, das sich dadurch kennzeichnet, dass es aus einem huelsenfoermigen Anschluskoerper, der ein Innengewinde, sowie ein Aussengewinde aufweist, und an einem Ende am Moebelstueck befestigbar ist und am freien Ende einen konisch ausgebildeten Spannkranz aus Spannbacken sowie aus einem Gewindestueck zum Halten des Beines, welches Gewindestueck mit dem Innengewinde des Anschlusskoerpers verschraubbar ist, und aus einer Spannmutter besteht, die mit dem Aussengewinde des Anschlusskoerpers verbindbar ist, und eine konische Ringflaeche aufweist, die auf den konischen Kranz aus Spannbacken einwirkt.

Es wird ein einfaches Einfuehren des Beines in das Verbindungsstueck sowie ein einfaches Spannen des Beines in der gewuenschten Hoehenlage dadurch erzielt, dass das Innengewinde des Anschlusskoerpers durchgehend ausgebildet ist.

Es wird eine sichere Spannwirkung unter Aufwendung geringer Spannkraefte dadurch erzielt, dass der konisch ausgebildete Kranz aus Spannbacken an seinem Uebergang zum Anschlusskoerper eine Verjuengung der Wanddicke aufweist. Diese Verjuengung der Wanddicke kann entsprechend den Materialeigenschaften ausgewaehlt werden, um zu einer bestimmten Elastizitaet der Spannzangen zu gelangen.

Der huelsenfoermige Anschlusskoerper kann robust und mit kompakten Abmessungen hergestellt werden, und die Spannmutter ist konstruktiv einfacher herzustellen, wenn der Aussendurchmesser des Anschlusskoerpers groesser ist als der maximale Durchmesser des konisch ausgebildeten Spannbackenkranzes.

Es wird ein sicheres Spannen des Moebelbeines im Verbindungsstueck und ein grosser Hub fuer das Einstellen des Moebelbeines dadurch erreicht, dass bei vollstaendig, bis zum Anschlag, aufgeschraubtem Gewindehuelse im Koerper des Anschlussstueckes, sich das Gewinde der Gewindehuelse ueber die duennwandig ausgebildete Wand der Spannbacken erstreckt.

Eine sichere und stabile Wirkverbindung zwischen Bein und Gewindestueck ist dadurch erzielbar, dass im Gewindestueck dem geschnittenen Teil ein Teilstueck mit kleinerem Durchmesser zur Aufnahme der Beines folgt, und dass die Verbindung mit dem Bein durch kraftschluessige Verbindung zwischen diesen Teilen erfolgt. In die Spannmutter ist ein genaues Spannkonus eingearbeitet, der einfach dadurch erzeugbar ist, dass die konisch ausgebildete Spannmutter als Hutmutter ausgefuehrt ist, und einen Sitz zur Aufnahme eines konisch ausgebildeten Einsatzring aufweist.

Es wird ein sicheres und gleichmaessiges Spannen des eingeschraubten Beines dadurch erzielt, dass bei eingeschraubtem Gewindestueck in das Bein das Gewinde des Gewindestueckes von der Aussenflaeche des Beines absteht. Durch Vorsehen eines Gewindestueckes wird der Materialaufwand wesentlich vermindert. Das vorgeschlagene Verbindungsstueck ist besonders einfach und billig mittels Spritzgussverfahren aus einer Aluminiumlegierung bzw. aus Kunststoff herstellbar.

Mit dem vorgeschlagenen Verbindungsstueck wird der Vorteil einer einfachen Hoeheneinstellung des Beines erzielt. Die Einstellung kann ueber nicht sichtbar angeordnete Bauteile erfolgen. Das Bein kann mit fest angeordneten Gleitern oder Fuessen ausgeruestet sein, die billig herstellbar und in einfacher Weise am Bein befestigbar sind.

Das Moebelstueck wahrt sein aesthetisch wertvolles Erscheinungsbild auch bei Vorhandensein von Neigungen des Fussbodens. Die feste Aufnahme des Beines im Verbindungsstueck ueber eine Gewindeverbindung und das Verspannen dieser Bauteile ueber einen spannbackenartig ausgebildeten Kranz, sowie die Freiheit bei der einstueckigen Ausbildung des Flansches zusammen mit dem Anschluskoerper, ermoeglichen es, das Verbindungsstueck zur Aufnahme von beliebig ausgebildeten Moebelbeinen, z.B. fuer Tische, Buecherregale, Betten und andere Moebelstuecke zu verwenden.

Ein Ausfuehrungsbeispiel des Erfindungsgegenstandes ist in den Zeichnungen dargestellt und wird im Anschluss genauer beschrieben werden.

Es zeigen:

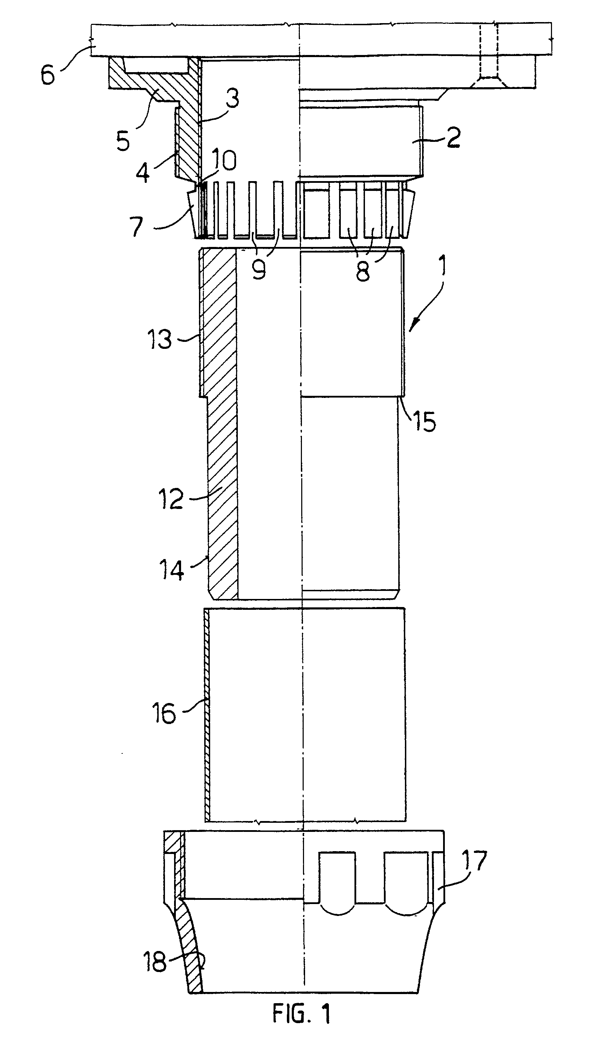

Fig. 1    ein Verbindungsstueck in auseinandergezogener Darstellung, teilweise in Ansicht und teiweise im Laengsschnitt;

Fig. 2    in vergroessertem Massstab einen Laengsschnitt des Verbindungsstueckes mit abgeaenderter Ausfuehrungsform der Spannmutter und Darstellung des Beines in zwei verschiedenen Hoehenlagen.

Das erfindungsgemaesse Verbindungsstueck 1 weist einen Anschlusskoerper 2 auf, der nach Art einer Gewindehuelse mit Innengewinde 3 und einem Aussengewinde 4 ausgebildet ist. An einem Ende weist das Verbindungsstueck 2 einen Flansch oder Befestigungsarm 5 auf, die zur Befestigung am Moebelteil 6 dienen. Am gegenueberliegenden Ende des Anschlusskoerpers ist ein konisch geformter Kranz 7 vorgesehen, der Spannbacken 8 aufweist, die durch Einschnitte oder Schlitze gegeneinander getrennt sind. Die Anzahl, die Form und die Abmessungen der Spannbacken 8 koennen frei gewaehlt werden, entsprechend dem Material des Verbindungsstueckes und in Abhaengigkeit von den Abmessungen des Beines.

Im dargestellten Ausfuehrungsbeispiel ist der Aussendurchmesser des Verbindungsstueckes groesser als der Maximaldurchmesser des konisch ausgebildeten Kranzes 7, dessen Anschlusswand 10 zum Koerper 2 duennwandig ausgefuehrt ist, um eine grosse Elastizitaet der Spannbacken zu gewaehrleisten.

Mit dem Innengewinde 3 ist ein Gewindestueck 12, das ein Aussengewinde 13 aufweist, verschraubbar. Das Gewindestueck 12 weist des weiteren ein Teilstueck mit kleinerem Druchmesser auf; somit wird ein Anschlag 15 fuer das rohrfoermig ausgebildete Bein 16 gebildet. Die Verbindung des rohrfoermigen Beines 16 mit dem Teilstueck 14 erfolgt ueber kraftschluessige Verbindung.

Auf das Aussengewinde 4 des Verbindungsstueckes ist eine Spannmutter 17 aufschraubbar. Die Spannmutter 17 weist einen konisch ausgebildeten Innensitz 18 auf. Die Arbeitsweise des vorgeschlagenen Verbindungsstueckes ist folgende:

Die Spannmutter 17 wird lose auf das Aussengewinde 4 aufgeschraubt. Somit befinden sich die Spannbacken 8 in Ruhestellung, d.h. sie sind parallel zur Achse des Anschlusstueckes ausgebildet.

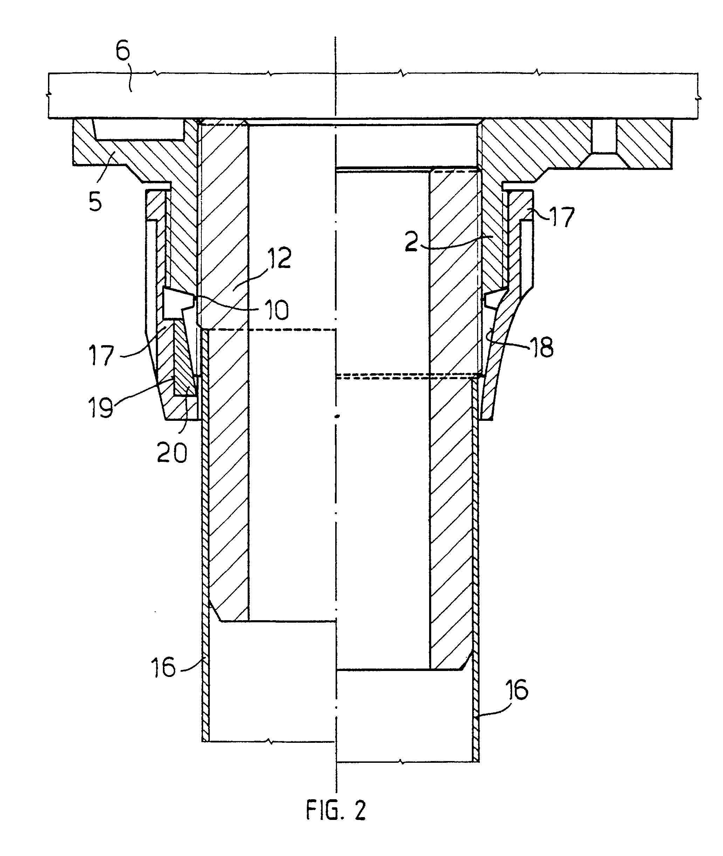

Das Einsetzen des Beines 16 erfolgt durch Verschrauben des Gewindestueckes 12, 13 mit dem Innengewinde 3 des Verbindungsstueckes 2 bis zum Anschlag am Moebelteil 6, wie dies auf der linken Seite der Zeichnung nach Fig. 2 dargestellt ist.

Zum Ausgleich von Unebenheiten oder Neigungen des Fussbodens genuegt es, bei Aufstellen des Moebelteiles die einzelnen Beine bis zur Beruehrung mit dem Boden auszuschrauben. Nach diesem Einstellvorgang, der z.B. auf der rechten Seite der Darstellung nach Fig. 2 dargestellt ist, werden die Beine in ihrer Lage dadurch gespannt, dass die Spannmutter 17 festgeschraubt wird. Dadurch wird durch die konische Ringflaeche 18 ein Druck in Radialrichtung auf die Spannbacken 8 ausgeuebt. Ein Loesen der Beine, z.B. waehrend eines Umzuges, erfolgt durch umgekehrte Reihenfolge der vorbeschriebenen Vorgaenge.

In einer weiteren Ausfuehrungsform, die zur Haelfte auf der linken Seite der Darstellung nach Fig. 2 gezeigt ist, ist die Spannmutter 17 als Hutmutter ausgebildet und weist einen Innensitz 19 zur Aufnahme eines Ringes 20 auf, der einen konischen Sitz festlegt. Der Ringeinsatz 20 kann z.B. aus Kunststoff oder Leichtmetall bestehen. Die Arbeitsweise dieser Hutmutter ist gleich der bereits beschriebenen Funktion. Der Aufbau der Hutmutter ist in diesem Fall konstruktiv einfacher.

## Patentansprüche

1.    Verbindungsstueck, zum Verbinden eines Beines mit einem Moebelteil, **dadurchgekennzeichnet**, dass es aus einem huelsenfoermigen Anschlusskoeper (2), der ein Innengewinde (3) sowie ein Aussengewinde (4) aufweist und an einem Ende (5) am Moebelstueck (6) befestigbar ist und am freien Ende einen konisch ausgebildeten Spannkranz (7) aus Spannbacken (8), sowie aus einem Gewindestueck (12) zum Halten des Beines (16), welches Gewindestueck (12) mit dem Innengewinde (3) des Anschlusskoerpers (2) verschraubbar ist, und aus einer Spannmutter (17) besteht, die mit dem Aussengewinde (4) des Anschlusskoerpers (2) verbindbar ist und eine konische Ringflaeche (18; 20) aufweist, die auf den konischen Kranz (7) aus Spannbacken (8) einwirkt.

2.    Verbindungsstueck, nach Patentanspruch 1, **dadurch gekennzeichnet**, dass das Innengewinde (3) des Anschlusskoerpers (2) durchge-

hend ausgefuehrt ist.

Kunststoff besteht.

3. Verbindungsstueck, nach Patentanspruch 1, **dadurch gekennzeichnet**, dass der aus Spannbacken (8) gebildete konische Kranz (7) an der Verbindungsstelle (10) mit dem Anschlusskoerper (2) duenner ausgebildet ist.

4. Verbindungsstueck, nach Patentanspruch 1, **dadurch gekennzeichnet**, dass der Aussendurchmesser des Anschlusskoerpers (2) groesser ist als der maximale Durchmesser des von den Spannbacken (8) gebildeten konischen Kranzes (7).

5. Verbindungsstueck, nach Patentanspruch 1, **dadurch gekennzeichnet**, dass bei vollstaendig im Anschlusskoerper (2) eingeschraubtem Abschlussstueck (12), sich das Gewinde (13) des Gewindestueckes (12) ueber die duennwandig ausgebildete Wand der Spannbacken (8) erstreckt.

6. Verbindungsstueck, nach Patentanspruch 1, **dadurch gekennzeichnet**, dass bei in das Bein (16) eingesetztem Gewindestueck (12), das Gewinde (13) des Gewindestueckes von der Aussenflaeche des Beines (16) absteht.

7. Verbindungsstueck, nach Patentanspruch 1, **dadurch gekennzeichnet**, dass die Spannmutter (17) als Hutmutter ausgebildet ist und einen Sitz (19) aufweist, der einen konisch ausgebildeten Einsatzring (20) aufnimmt.

8. Verbindungsstueck, nach Patentanspruch 1, **dadurch gekennzeichnet**, dass der Anschlusskoerper (2) einen Flansch (5) zum Befestigen am Moebelteil aufweist.

9. Verbindungsstueck, nach Patentanspruch 1, **dadurch gekennzeichnet**, dass das Verbindungsstueck (12) ein Gewinde aufweist und hohl ausgebildet ist.

10. Verbindungsstueck, nach Patentanspruch 1, **dadurch gekennzeichnet**, dass auf das mit einem Gewinde versehene Verbindungsstueck ein Teilstueck mit kleinerem Durchmesser folgt, das mit dem Bein kraftschluessig verbindbar ist.

11. Verbindungsstueck, nach Patentanspruch 1, **dadurch gekennzeichnet**, dass es aus Metall besteht.

12. Verbindungsstueck, nach Patentanspruch 1, **dadurch gekennzeichnet**, dass es aus

FIG. 1

FIG. 2

| | Europäisches Patentamt | **EUROPÄISCHER RECHERCHENBERICHT** | Nummer der Anmeldung<br><br>**EP 91 10 7249** |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 100 758   (TOSANI)<br>* Seite 1, Absatz 1; Figuren 1, 3, 4 * * Seite 2, Absätze 3 - 4 *<br>– – – | 1,4,7,8 | A 47 B 13/02<br>F 16 B 12/52 |
| A | FR-E-7 804 4   (SOIETE ANONYME DES ETABLISSE-MEMTS CATU)<br>* Seite 2, Absätze 7 - 9; Figuren 1, 4 *<br>– – – | 1,6,9,10 | |
| A | FR-A-2 395 451   (ERMETO)<br>* Anspruch 1; Figuren 4-7 *<br>– – – | 1,3-5,7 | |
| A | GB-A-2 129 892   (WIRSBO BRUKS AKTIEBOLAG)<br>* Zusammenfassung; Figur 1 *<br>– – – – | 1,4,7 | |

**RECHERCHIERTE SACHGEBIETE (Int. Cl.5)**

A 47 B
F 16 B
F 16 L

Der vorliegende Recherchenbericht wurde für alle Patentansprüche erstellt

| Recherchenort | Abschlußdatum der Recherche | Prüfer |
|---|---|---|
| Den Haag | 05 Juli 91 | JONES C.T. |